# EUROPEAN PATENT APPLICATION

(11) **EP 2 960 570 A1**
(43) Date of publication of application: **30.12.2015**
(21) Application number: 15168418.0
(22) Date of filing: 20.05.2015
(51) Int. Cl.: F21S 8/04, F21V 14/02, F21V 21/30, F21V 17/02, F21V 19/02, F21Y 101/02, F21Y 103/00, F21V 8/00

(54) **Lighting device and operating method thereof**

(30) Priority: 27.06.2014 TW 103122340
(71) Applicant: Radiant Opto-Electronics Corporation, Kaohsiung City 806 (TW)
(72) Inventor: JU, Chih-Hung, 806 Kaohsiung City (CN); HUANG, Guo-Hao, 806 Kaohsiung City (CN); HSIEH, Chien-Min, 806 Kaohsiung City (CN); CHEN, Kun-Feng, 806 Kaohsiung City (CN)
(74) Representative: Boult Wade Tennant

(57) **Abstract**

A lighting device includes a rotating unit (3), a clutching unit (4) releasably engaging the rotating unit (3), and a lighting unit (5) connected to the rotating unit (3). The clutching unit (4) is operable to move between a first position, where the clutching unit (4) engages the rotating unit (3) to restrict the same from freely rotating, and a second position, where the clutching unit (4) disengages the rotating unit (3) to permit any direction of rotation thereof. The lighting unit (5) is adjustable when the clutching unit (4) is in the second position. The clutching unit (4) is moved from the second position to the first position to position the lighting unit (5).

## Description

The invention relates to a lighting device, more particularly to a lighting device having an adjustable illumination angle and an operating method thereof.

Focus and range of the light field of a conventional large lighting device cannot be adjusted to cope with the different purposes and areas of use. For example, a light field of a lighting device on a ceiling of a study room or a living room cannot be adjusted to focus on a study table or to uniformly illuminate the entire living room.

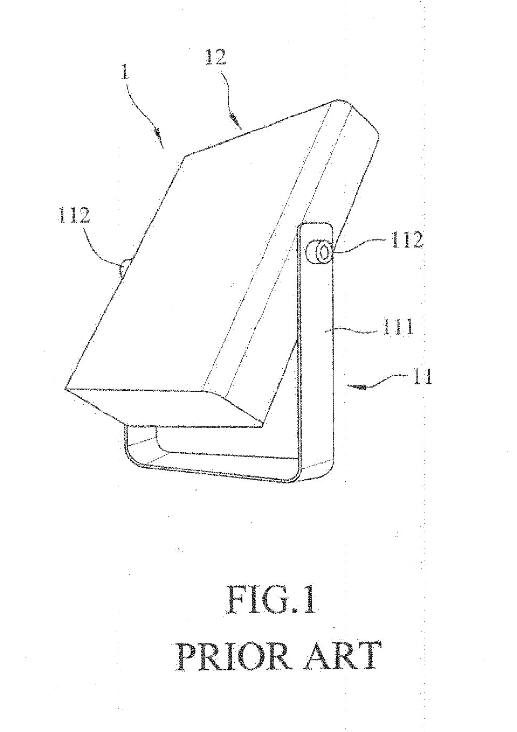

To resolve the aforesaid drawbacks of the conventional lighting device, an existing lighting device is developed with an adjustable illumination angle. Referring to Fig. 1, an existing light ing device 1 is shown to include a support unit 11, a lighting unit 12 disposed on and supported by the support unit 11, and two fixing members 112 fixedly fastening the lighting unit 12 between two support arms 111 of the support unit 11. To adjust an illumination angle of the lighting device 1, the fixing members 112 must first be loosened by using a tool, after which the lighting unit 12 is adjusted to a desired illumination angle. After adjustment, the fixing members 112 are tightened by using the tool. Adjustment of the illumination angle of the lighting device 1 is thus inconvenient. Further, if the lighting device 1 is disposed on a higher place, it is more difficult to adjust the illumination angle of the lighting device 1.

Therefore, an object of the present invention is to provide a lighting device having an adjustable illumination angle.

Accordingly, a lighting device of this invention comprises a rotating unit, a clutching unit and a lighting unit connected to the rotating unit. The clutching unit releasably engages the rotating unit and is operable to move between a first position, where the clutching unit engages the rotating unit to restrict the rotating unit from freely rotating, and a second position, where the clutching unit disengages the rotating unit to permit any direction of rotation of the rotating unit. The lighting unit is adjustable when the clutching unit is in the second position. The clutching unit is moved from the second position to the first position to position the lighting unit.

Another object of this invention is to provide a method of operating the aforesaid lighting device.

Accordingly, a method of operating a lighting device which includes a rotating uni t, a clutching unit, and a lighting unit connected to the rotating unit comprises the steps of: engaging the clutching unit with the rotating unit to restrict the lighting unit from freely rotating; and disengaging the clutching unit from the rotating unit to permit any direction of rotation of the lighting unit.

Other features and advantages of the present invention will become apparent in the following detailed description of the embodiments with reference to the accompanying drawings, of which:
Fig. 1 is a perspective view of a conventional lighting device;
Fig. 2 is an exploded perspective view of the first embodiment of a lighting device according to the present invention;
Fig. 3 is a sectional side view of the first embodiment in an assembled state, illustrating a clutching unit of the first embodiment in a first position;
Fig. 4 is an exploded perspective view of the clutching unit of the first embodiment;
Fig. 4(a) is a bottom perspective view of the clutching unit in an assembled state;
Fig. 4(b) is a view similar to Fig. 4 (a), but illustrating resilient portions of a movable member of the clutching unit in a deformed state;
Fig. 5 is a view similar to Fig. 3, but illustrating a lighting unit disposed in a desired illumination angle;
Fig. 6 is an isolated portion of Fig. 5;
Fig. 7 is a view similar to Fig. 3, but illustrating the clutching unit in a second position;
Fig. 8 is an isolated portion of Fig. 7;
Fig. 9 is an exploded perspective view of the second embodiment of the lighting device according to the present invention;
Fig. 10 is a sectional side view of the second embodiment, illustrating a clutching unit in a first position;
Fig. 11 is an isolated portion of Fig. 10;
Fig. 12 is a view similar to Fig. 11, but illustrating the clutching unit in a second position;
Fig. 13 is a sectional side view of the third embodiment of the lighting device according to the present invention, illustrating a clutching unit in a first position;
Fig. 14 is a fragmentary perspective view of the third embodiment, illustrating the clutching unit in a second position; and
Fig. 15 is a perspective view, illustrating a combination of two lighting devices of the present invention.

Before the present invention is described in greater detail with reference to the accompanying embodiments, it should be noted herein that like elements are denoted by the same reference numerals throughout the disclosure.

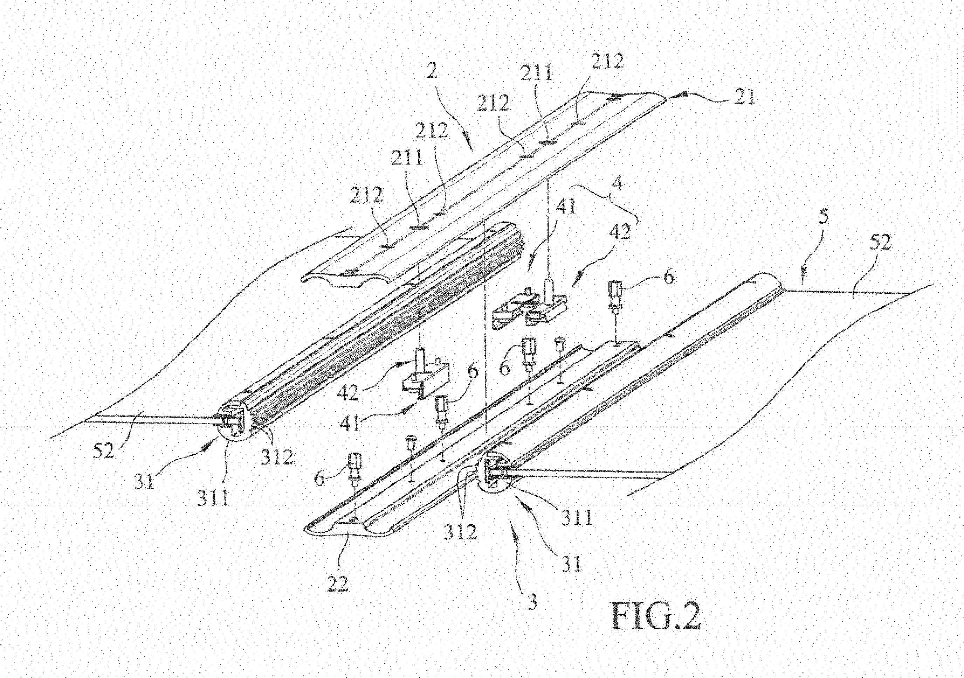

Referring to Figs. 2 to 8, the first embodiment of a lighting device according to the present invention is shown to comprise a housing unit 2, a rotating unit 3, a clutching unit 4, and a lighting unit 5.

The housing unit 2 includes an upper housing member 21 provided with a plurality of through holes 211 and fixing holes 212 along the length thereof, and a lower housing member 22 cooperating with the upper housing member 21 to clamp therebetween the rotating unit 3. Each of the through holes 211 is formed between two adjacent ones of the fixing holes 212. The rotating unit 3 includes two rotating members 31 rotatably clamped between the upper and lower housing members 21, 22. In this embodiment, each rotating member 31 has a ratchet structure, and includes a rotating body 311, and a plurality of spaced-apart engaging portions 312 disposed around the rotating body 311. The engaging portions 312 of each rotating member 31 are in the form of ratchet teeth, and face the engaging portions 312 of the other rotating member 31.

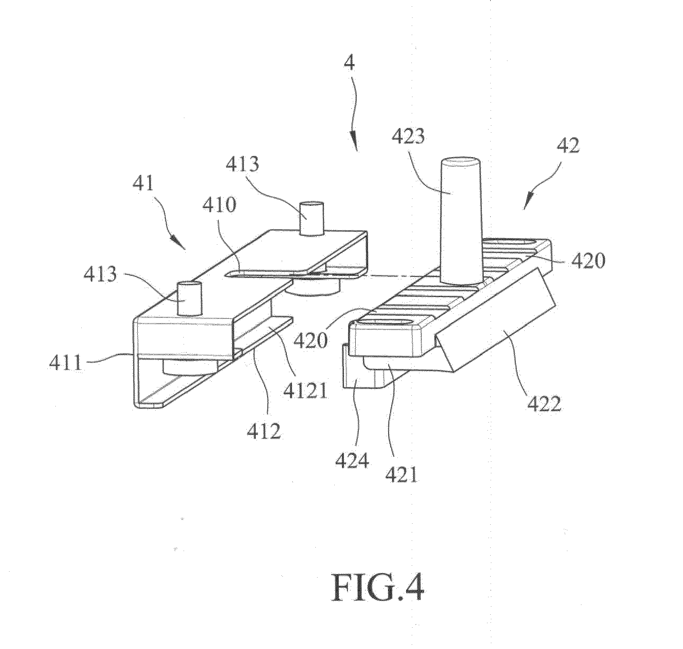

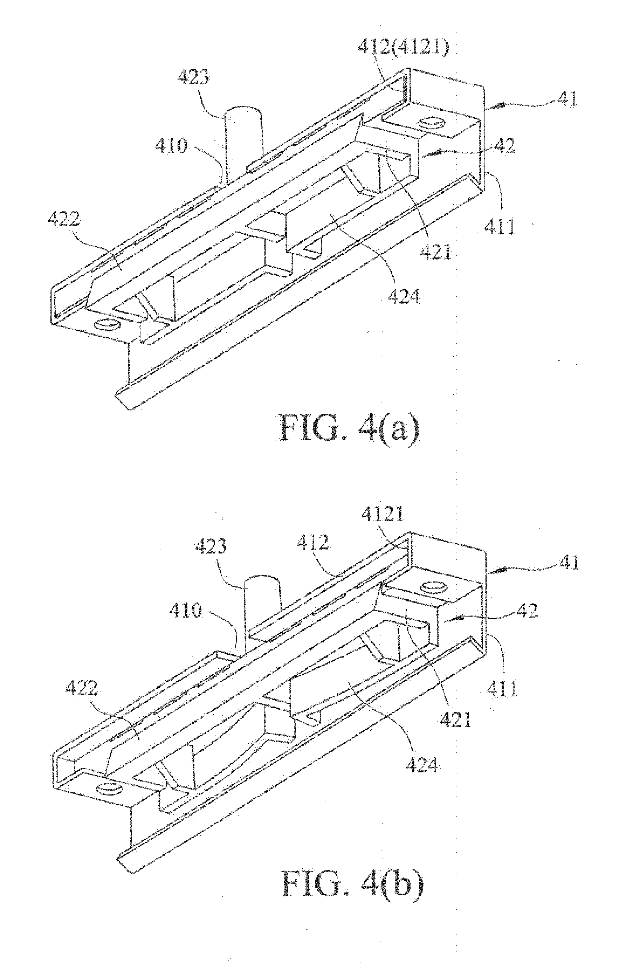

With reference to Figs. 2 and 4, the clutching unit 4 includes two spaced-apart fixed members 41 disposed between the upper and lower housing members 21, 22, and two movable members 42 movably and respectively disposed in the fixed members 41. Each fixed member 41 is made of metal, and includes a first seat portion 411 connected to the lower housing member 22 using two screws 6, a slide groove 412 formed in the first seat portion 411 and having an opening 4121 facing a respective movable member 42, two insert portions 413 disposed on the first seat portion 411 and inserted into two corresponding fixing holes 212, and an elongated slot 410 that is formed in a top surface of the first seat portion 411 between the insert portions 413, that communicates with the slide groove 412, and that extends in a moving direction of the respective movable member 42.

Each movable member 42 is made of an elastomer, and includes a second seat portion 421 slidably received in the slide groove 412 of a respective fixed member 41 via the opening 4121 and having a plurality of spaced-apart grooves 420 extending inwardly from a top surface thereof, a stop portion 422 extending from the second seat portion 421 to engage a respective rotating member 31, a protruding portion 423 that protrudes from the top surface of the second seat portion 421, that is movable along the elongated slot 410 in a direction parallel to a sliding direction of the second seat portion 421, and that extends out of the upper housing member 21 through a corresponding through hole 211, and two spaced-apart resilient portions 424 disposed on the second seat portion 421 opposite to the stop portion 422 and abutting against the first seat port ion 411. Because each movable member 42 needs to abuttingly support the weight of the respective rotating member 31, each movable member 42 will receive a force toward the upper housing member 21 to increase friction between the first and second seat portions 411, 421, so that the second seat portion 421 will not easily move. The grooves 420 are provided to reduce contact area between the first and second seat portions 411, 421 so as to minimize the friction between the two and to permit smooth movement of each movable member 42 relative to the respective fixed member 41. In this embodiment, each movable member 42 is made of polycarbonate (PC), but is not limited thereto.

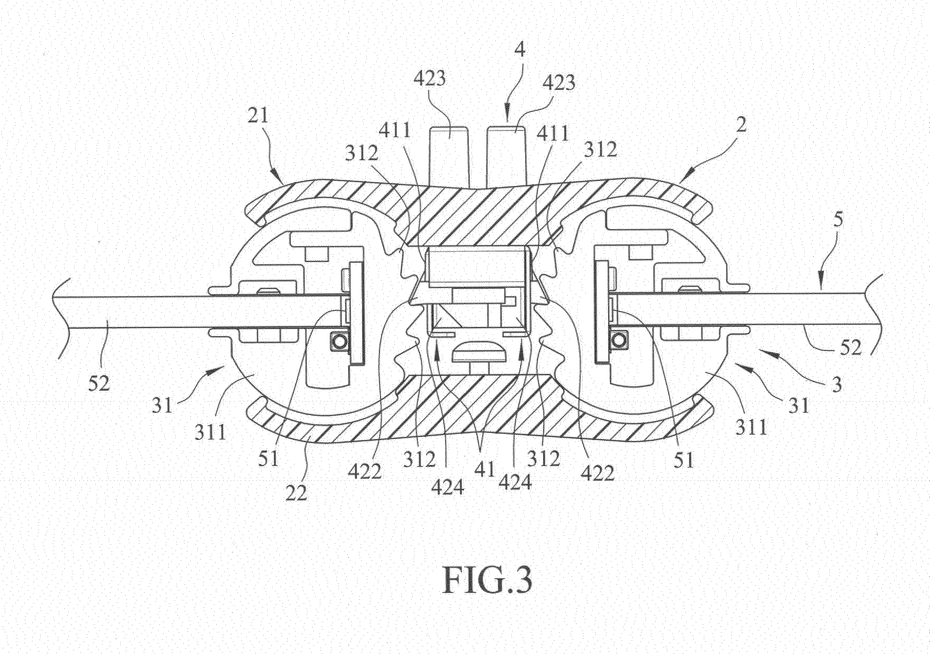

With reference to Fig. 3, the lighting unit 5 includes two light sources 51 respectively disposed inside the rotating bodies 311 of the rotating members 31, and two light guide plates 52 each having one end fixed inside the rotating body 311 of the respective rotating member 31 and facing a corresponding light source 51, and another opposite end extending out of the rotating body 311 of the respective rotating member 31. Each light source 51 is light-emitting diode.

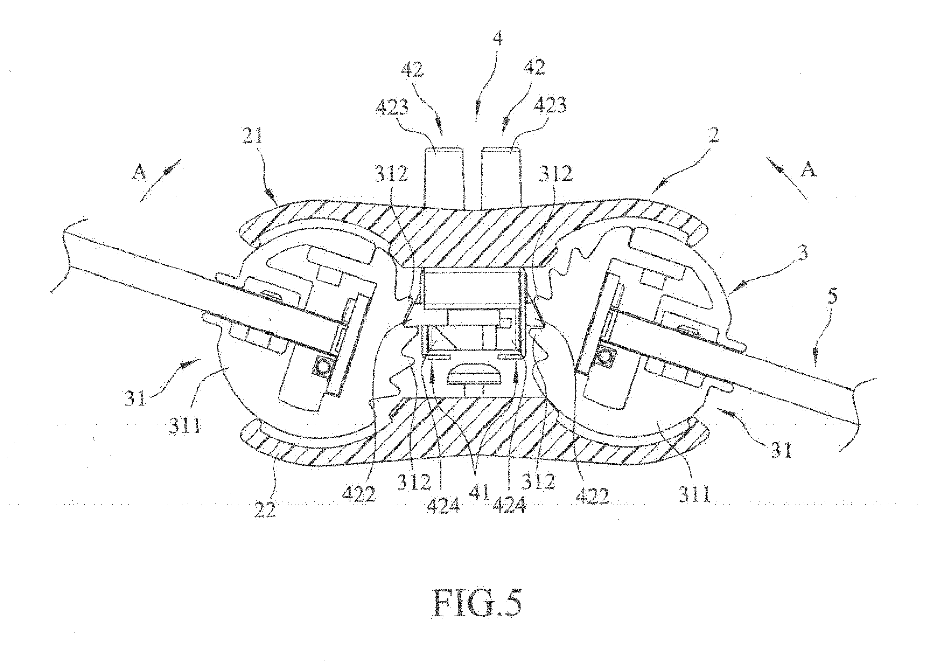

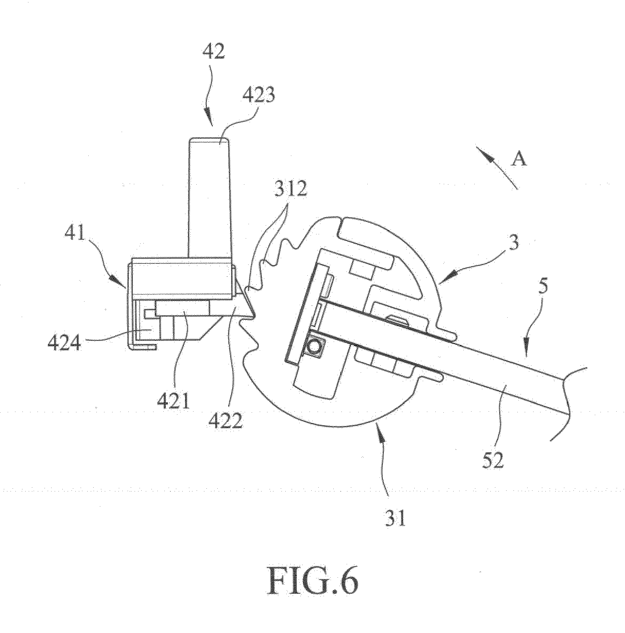

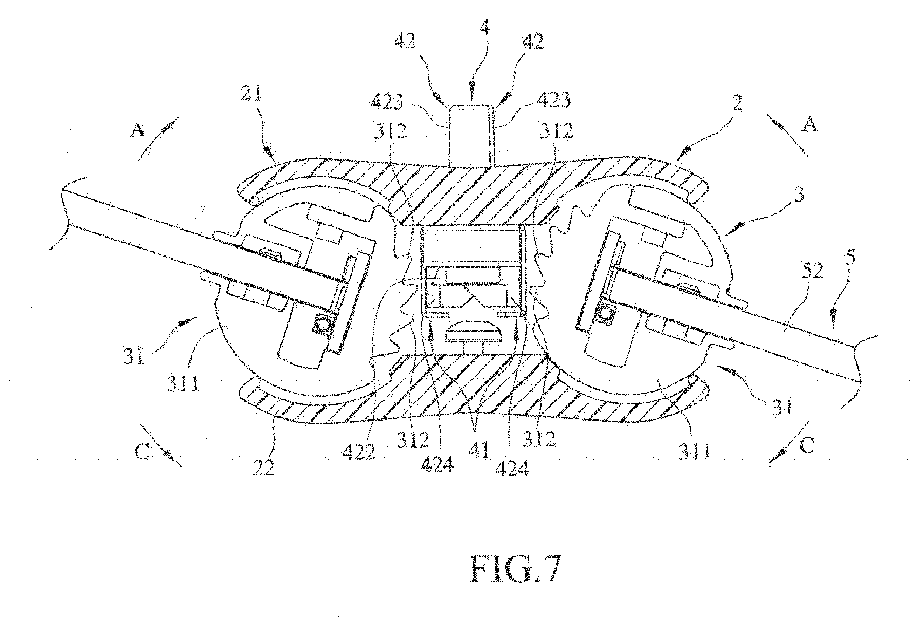

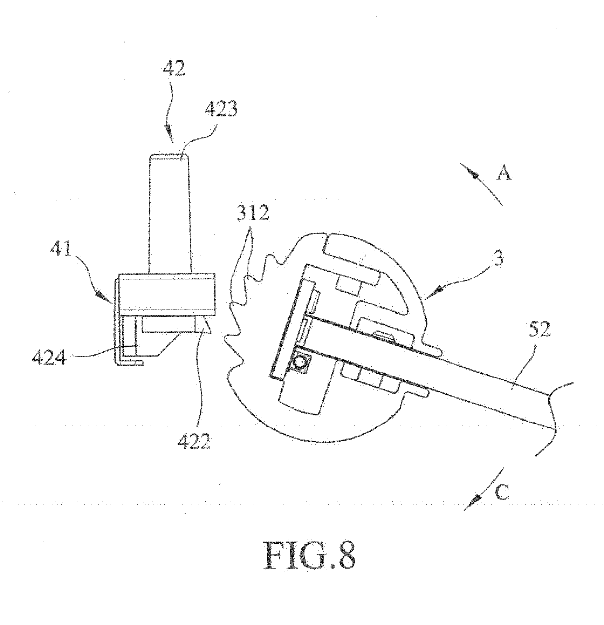

The protruding portion 423 of each movable member 42 is operable to move the respective movable member 42 between a first position and a second position. In the first position, as shown in Figs. 5 and 6, the stop portion 422 of each movable member 42 engages one of the ratchet teeth or engaging portions 312 of the respective rotating member 31, and each rotating member 31 is permitted to rotate in a single direction. At this time, each light guide plate 52 of the lighting unit 5 can be moved in the direction of an arrow (A) to adjust an illumination angle of the lighting unit 5. In the second position, as shown in Figs. 7 and 8, the stop portion 422 of each movable member 42 disengages from the one of the ratchet teeth 312 of the respective rotating member 31, and each rotating member 31 is permitted to rotate either in the direction of the arrow (A) or in the direction of an arrow (C) which is opposite to the arrow (A). At this time, an illumination angle of the lighting unit 5 can be adjusted by moving each light guide plate 52 in the direction of the arrow (A) or the arrow (C). After the desired illumination angle of the lighting unit 5 is adjusted, the protruding portion 423 of each movable member 42 is operated to move the respective movable member 42 from the second position to the first position to position the lighting unit 5 at the desired illumination angle.

With reference to Figs. 4, 5 and 6, the protruding portion 423 of any one of the movable members 42 may be operated to move along the elongated slot 410 of the respective fixed member 41 so as to slide the second seat portion 421 deep into the slide groove 412 of the respective fixed member 41. During this time, the resilient portions 424 in a non-deformed state, as shown in Fig. 4 (a), are compressed to a deformed state, as shown in Fig. 4(b), to store a restoring force for biasing the second seat portion 421 from the second position to the first position. By operating the protruding portion 423, the second seat portion 421 can be moved to engage with or disengage from the respective rotating member 31.

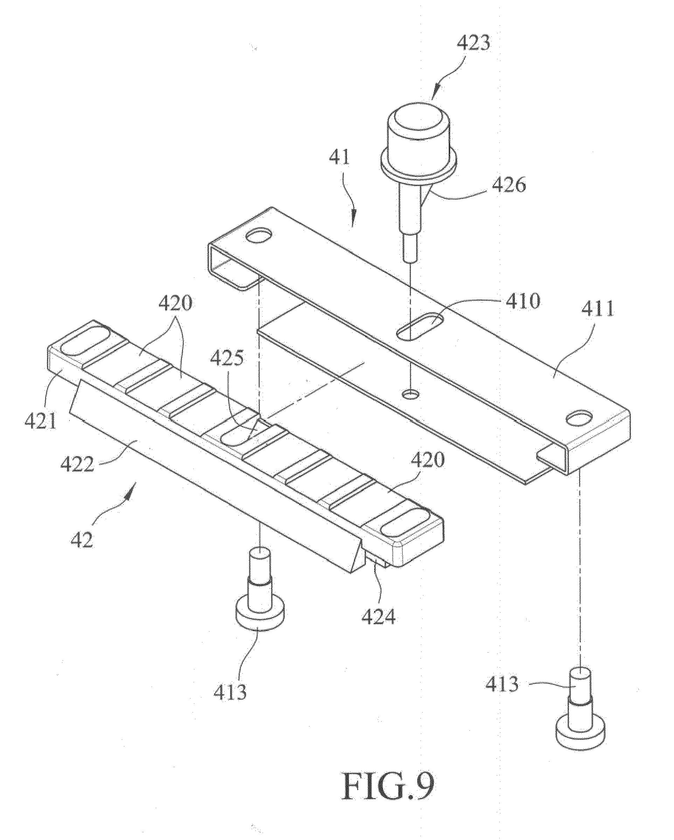

Referring to Figs. 9 to 12, the second embodiment of a lighting device according to the present invention is shown to be similar to the first embodiment. However, in this embodiment, each movable member 42 further includes a driven portion 425 disposed in the second seat portion 421, located below the elongated slot 410 of the respective fixed member 41, and having a slanting end face 427. The protruding portion 423 of each movable member 42 extends through the elongated slot 410 and the second seat portion 421, and has an inclined surface 426 abutting against the slanting end face 427 of the driven portion 425.

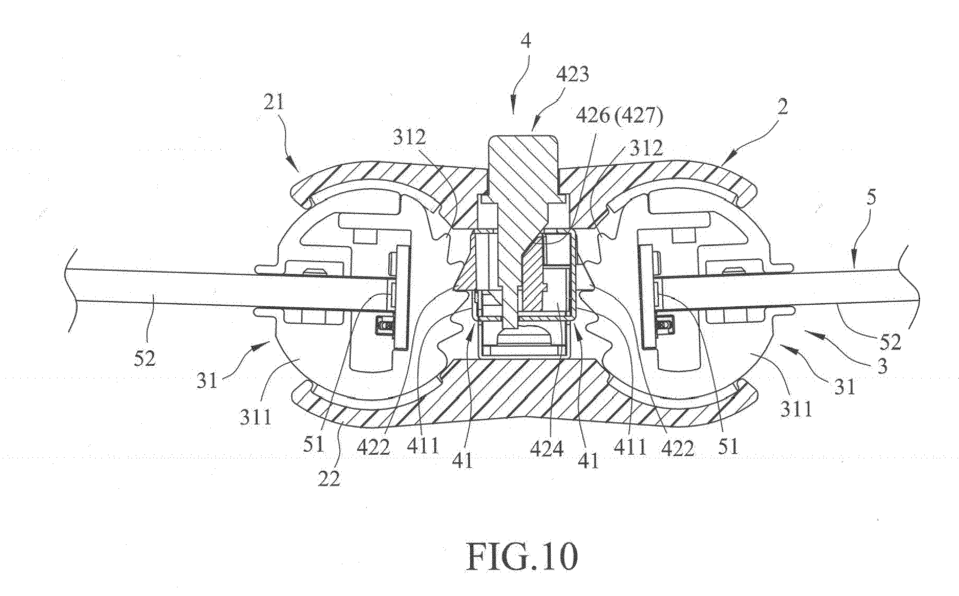

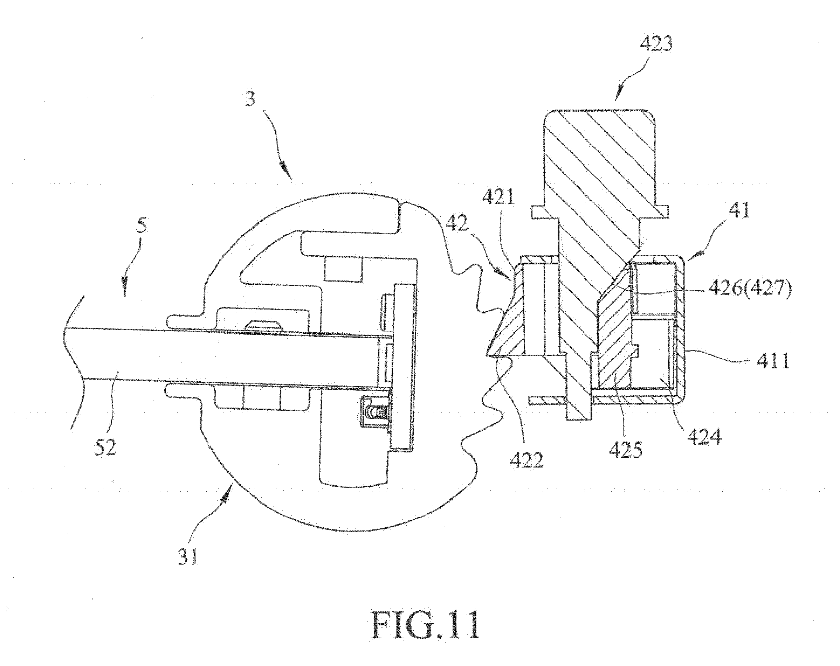

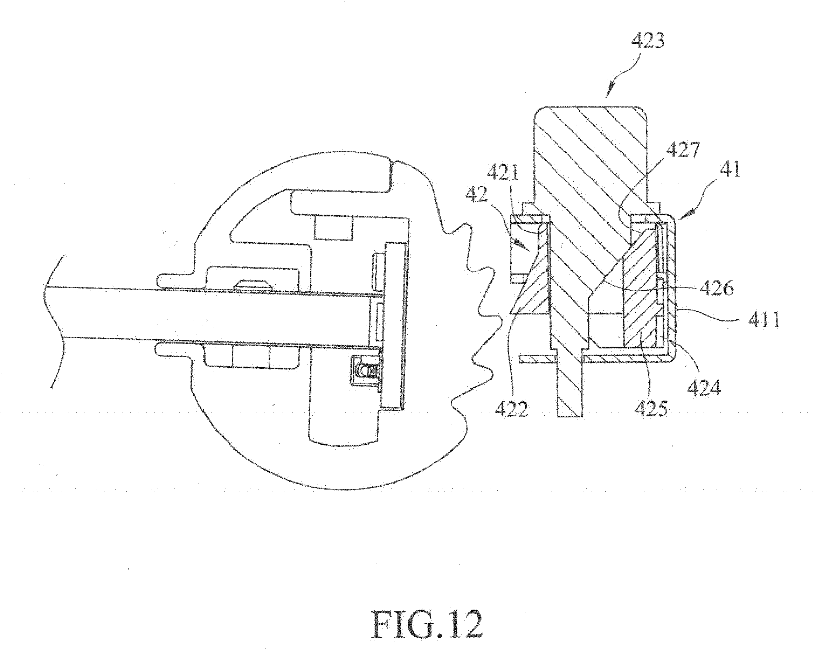

With reference to Figs. 10 to 12, the protruding portion 423 of any one of the movable members 42 may be operated by pressing the protruding portion 423 toward the lower housing member 22, so that the inclined surface 426 thereof can push the slanting end face 427 of the driven portion 425 to move the driven portion 425 toward the first seat portion 411. The second seat portion 421 is driven to move toward the first seat portion 411 (see Fig. 12), and the resilient portions 424 are deformed to store a restoring force for biasing the second seat portion 421 from the second position shown in Fig. 12 to the first position shown in Figs. 10 and 11. When the pressing of the protruding portion 423 is released, the second seat portion 421 is restored to the first position through the restoring force of the resilient portions 424, and the driven portion 425 pushes the inclined surface 426 of the protruding portion 423 so as to restore the protruding portion 423 to its original position. Similarly, by operating the protruding portion 423, the second seat portion 421 can be moved to engage with or disengage from the respective rotating member 31.

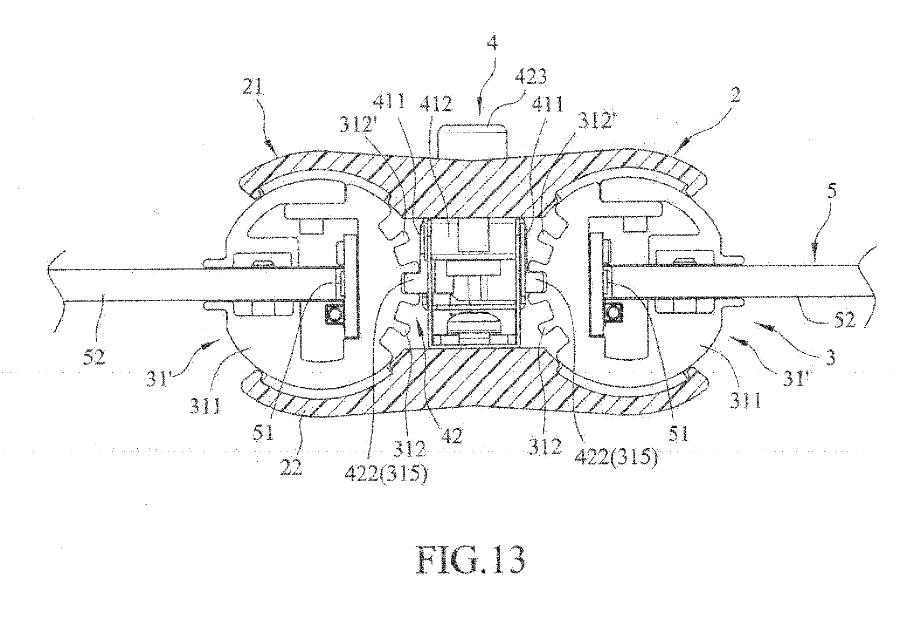

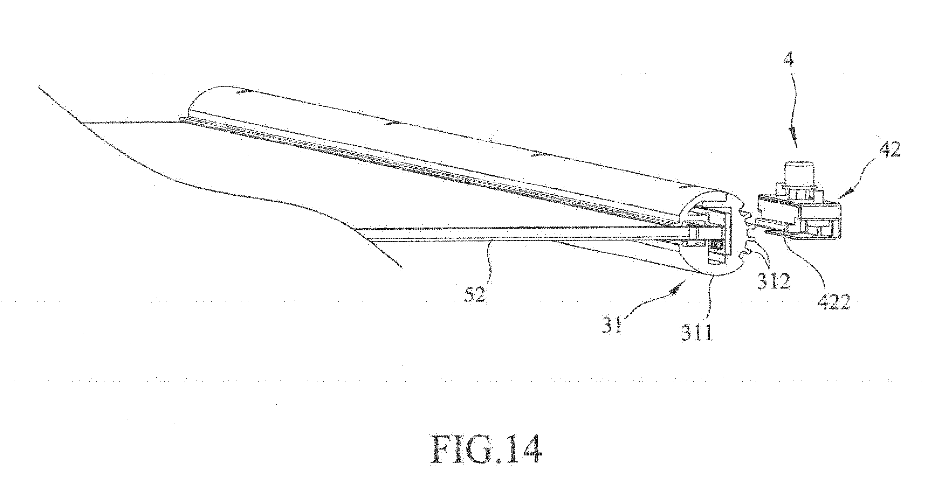

Referring to Figs. 13 and 14, the third embodiment of a lighting device according to the present invention is shown to be similar to the first embodiment. However, in this embodiment, each rotating member 31' has a gear structure, and the engaging portions 312' of each rotating member 31' are in the form of gear teeth. The stop portion 422 of each movable member 42 engages a space 315 between two adjacent ones of the gear teeth or engaging portions 312' when each movable member 42 is moved to the first position.

A method of operating the lighting device of this invention comprises the steps of engaging the clutching unit 4 with the rotating unit 3 to limit rotation of the lighting unit 5, and disengaging the clutching unit 4 from the rotating unit 3 to permit free rotation of the lighting unit 5. With reference to Figs. 5 and 6, each movable member 42 is movable relative to the respective fixed member 41 between the first position (see Figs. 5 and 6) and the second position (see Figs. 7 and 8). In the first position, the stop portion 422 of each movable member 42 engages one of the engaging portions 312 of the respective rotating member 31, so that each rotating member 31 can rotate in the direction of the arrow (A). At this time, an illumination angle of the lighting unit 5 can be adjusted by moving each light guide plate 52 of the lighting unit 5 in the direction of the arrow (A) to a desired position. With reference to Figs. 7 and 8, if it is desired to move each light guide plate 52 in the opposite direction, the protruding portion 423 of each movable member 42 is operated to move the respective movable member 42 from the first position to the second position. At this time, the stop portion 422 of each movable member 42 disengages from the one of the engaging portions 312 of the respective rotating member 31, and an illumination angle of the lighting unit 5 can be adjusted by moving each light guide plate 52 in the direction of the arrow (A) or the arrow (C) to a desired position. After the desired illumination angle of the lighting unit 5 is adjusted, the protruding portion 423 of each movable member 42 is operated to move the respective movable member 42 from the second position to the first position to position the lighting unit 5 at the desired illumination angle. When the light guide plates 52 are positioned, the restoring forces of the resilient portions 424 of each movable member 42 will bias the corresponding movable member 42 back to the first position. The movable member 42 shown in Fig. 9 is also movable relative to the respective fixed member 41 between the first position (see Figs. 10 and 11) and the second position (see Fig. 12) so as to engage and disengage the stop portion 422 with and from the respective rotating member 31.

Further, when each rotating member 31 has a gear structure, as shown in Figs. 13 and 14, each movable member 42 in the first position (see Fig. 13) will not permit rotation of the respective rotating member 31. When each movable member 42 is moved from the first position to the second position (see Fig. 14), the stop portion 422 of each movable member 42 disengages from the one of the engaging portions 312 of the respective rotating member 31, so that each light guide plate 52 can be moved either in the direction of the arrow (A) or the arrow (C) to a desired position.

For example, the weight of the lighting device is 1.9 kgs., and a computer simulation analysis reveals that each engaging portion 312 can bear a 10-kilogram load and a maximum stress of 4.5 N/mm². Further, the yield stress of the polycarbonate is 55 N/mm², and the calculated safety factor could reach 10 or more. Hence, it is not necessary to additionally use fastening members to aid in bearing the weight of the lighting unit 5. Moreover, according to the different use requirements, the ratchet teeth or engaging portions 312 of each rotating member 31 may be inclined in directions opposite to those shown in Fig. 3, and the stop portion 412 of each movable member 42 may also be inclined opposite to that shown in Fig. 3 to engage with one of the engaging portions 312.

Through the coordination of the rotating unit 3 and the clutching unit 4, the illumination angle of the lighting unit 5 can be adjusted without using any tool. Further, by simply operating the protruding portion 423 of each movable member 42, the position of the lighting unit 5 can be restored. Hence, the lighting device is convenient to use.

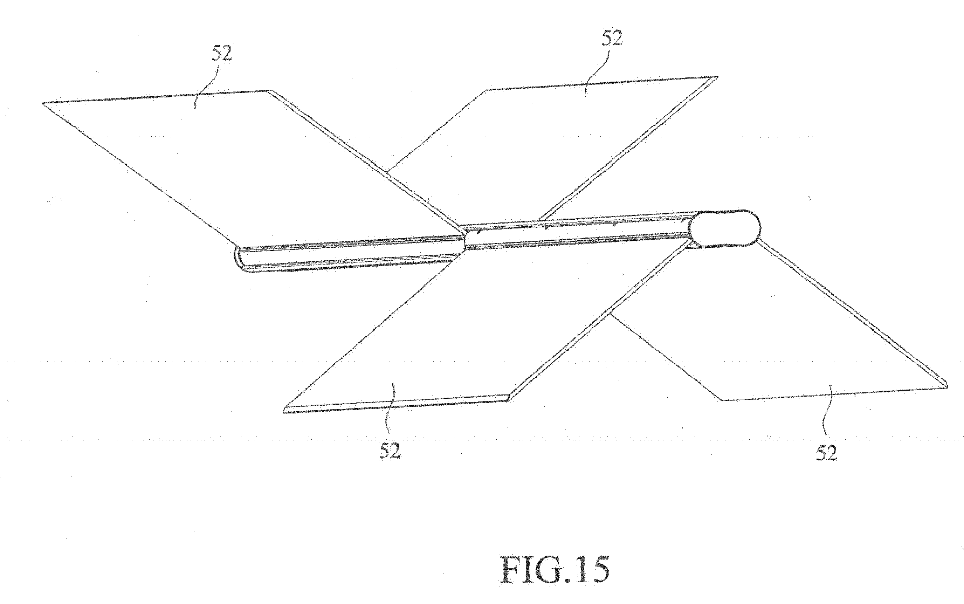

Referring to Fig. 15, two lighting devices of this invention may be interconnnected, and the four light guide plates 52 may be individually adjusted to achieve the effect of multidirectional illumination.

In sum, because each engaging portion 312 of each rotating member 31 can bear the weight of the lighting uni t 5, there is no need for additional use of fastening members to aid in bearing the weight of the lighting unit 5. Further, through the coordination of the rotating unit 3 and the clutching unit 4, the illumination angle of the lighting unit 5 can be directly adjusted and positioned without using any tool.

## Claims

1. A lighting device, comprising:
a rotating unit (3);
a clutching unit (4) releasably engaging said rotating unit (3) and operable to move between a first position, where said clutching unit (4) engages said rotating unit (3) to restrict said rotating unit (3) from freely rotating, and a second position, where said clutching unit (4) disengages said rotating unit (3) to permit any direction of rotation ot said rotating unit (3); and
a lighting unit (5) connected to said rotating unit (3), said lighting unit (5) being adjustable when said clutching unit (4) is in said second position;
wherein said clutching unit (4) is moved from said second position to said first position to position said lighting unit (5).

2. The lighting device as claimed in Claim 1, wherein said rotating unit (3) includes a rotating member (31, 31') having a rotating body (311), and a plurality of spaced-apart engaging portions (312, 312') disposed around said rotating body (311), said clutching unit (4) including a fixed member (41), and a movable member (42) that is engageable with one of said engaging portions (312) and that is disposed movably in relation to said fixed member (41) to move between said first and second positions.

3. The lighting device as claimed in Claim 2, wherein, when said clutching unit (4) is moved to said first position, said movable member (42) engages one of said engaging portions (312) and said rotating, member (31) is permitted to rotate in a single direction, and when said clutching unit (4) is moved to said second position, said movable member (42) disengages from said rotating member (31) so that said rotating member (31) can rotate in dual directions.

4. The lighting device as claimed in Claim 2, wherein, when said clutching unit (4) is moved to said first position, said movable member (42) engages a space (315) between two adjacent ones of said engaging portions (312') and said rotating member (31') is prevented from rotation, and when said clutching unit (4) is moved to said second position, said movable member (42) disengages from said rotating member (31') so that said rotating member (31') can rotate in dual directions.

5. The lighting device as claimed in Claims 2-4, wherein said clutching unit (4) further includes a resilient portion (424) for biasing said movable member (42) from said second position to said first position.

6. The lighting device as claimed in Claim 5, wherein said fixed member (41) includes a first seat portion (411), and a slide groove (412) formed in said first seat portion (411) and having an opening (4121) facing said movable member (42).

7. The lighting device as claimed in Claim 6, wherein:
said movable member (42) includes a second seat portion (421) slidably received in said slide groove (412), a stop portion (422) extending from said second seat portion (421) to engage said rotating member (31) when said movable member (42) is moved to said first position; and
said second seat portion (421) slides toward said first seat portion (411) along said slide groove (412) and said resilient portion (424) deforms and stores a restoring force for biasing said movable member (42) from said second position to said first position when said movable member (42) is moved from said first position to said second position.

8. The lighting device as claimed in Claims 5-7, wherein said movable member (42) further includes a protruding portion (423), said protruding portion (423) being operable to move said movable member (42) between said first and second positions, said protruding portion (423) being movable in a direction parallel to a sliding direction of said movable member (42).

9. The lighting device as claimed in Claim 8, wherein said fixed member (41) further includes an elongated slot (410) communicating with said slide groove (412), and said protruding portion (423) is movable along said elongated slot (410).

10. The lighting device as claimed in Claims 5-7, wherein said movable member (42) further includes a protruding portion (423), said protruding portion (423) being operable to move said movable member (42) between said first and second positions, said protruding portion (423) being movable in a direction transverse to a sliding direction of said movable member (42).

11. The lighting device as claimed in Claim 10, wherein said movable member (42) further includes a driven portion (425) having a slanting end face (427), said protruding portion (423) having an inclined surface (426) abutting against said slanting end face (427) of said driven portion (425), said inclined surface (426) of said protruding portion (423) pushing said slanting end face (427) of said driven portion (425) when said protruding portion (423) is operated to move said movable member (42) from said first position to said second position.

12. The lighting device as claimed in Claims 2-11, further comprising a housing unit (2), said housing unit (2) including an upper housing member (21) and a lower housing member (22) cooperating with each other to clamp therebetween said rotating member (31, 31').

13. The lighting device as claimed in Claim 12, wherein said upper housing member (21) has at least one fixing hole (212), and said fixed member (41) has at least one insert portion (413) inserted into said fixing hole (212).

14. The lighting device as claimed in Claims 12-13, wherein said upper housing member (21) has a through hole (211), and said movable member (42) includes a protruding portion (423) extending out of said upper housing member (21) through said through hole (211).

15. The lighting device as claimed in Claim 7, wherein said second seat portion (421) is provided with a plurality of spaced-apart grooves (420) extending inwardly from a top surface thereof.

16. The lighting device as claimed in Claim 1, wherein said rotating unit (3) includes a plurality of rotating members (31, 31'), said clutching unit (4) including a plurality of fixed members (41), and a plurality of movable members (42) respectively and movably disposed in said fixed members (41), said lighting unit (5) including a plurality of light sources (51) respectively disposed inside said rotating members (31, 31'), and a plurality of light guide plates (52) each having one end disposed inside a corresponding one of said rotating members (31, 31') and facing a respective one of said light sources (51), and another opposite end extending out of a corresponding one of said rotating members (31, 31').

17. A method of operating the lighting device as claimed in Claim 1, said method comprising the steps of:
engaging said clutching unit (4) with said rotating unit (3) to restrict said lighting unit (5) from freely rotating; and
disengaging said clutching unit (4) from said rotating unit (3) to permit any direction of rotation of said lighting unit (5).

18. The method as claimed in Claim 17, wherein:
said clutching unit (4) includes a fixed member (41), and a movable member (42) movably disposed in said fixed member (41) and having a protruding portion (423);
said lighting unit (5) includes a light guide plate (52);
when said protruding portion (423) is operated to move said clutching unit (4) to engage said rotating unit (3), said light guide plate (52) is limited to move only in one direction; and
when said protruding portion (423) is operated to move said clutching unit (4) to disengage from said rotating unit (3), said light guide plate (52) is freely movable.

19. The method as claimed in Claim 17, wherein:
said clutching unit (4) includes a fixed member (41), and a movable member (42) movably disposed in said fixed member (41) and having a protruding portion (423) ;
said lighting unit (5) includes a light guide plate (52);
when said protruding portion (423) is operated to move said clutching unit (4) to engage said rotating unit (3), movement of said light guide plate (52) is prevented; and
when said protruding portion (423) is operated to move said clutching unit (4) to disengage from said rotating unit (3), said light guide plate (52) is freely movable.
